Europäisches Patentamt

European Patent Office

Office européen des brevets

(11) Numéro de publication: **0 080 927**
**B1**

(12) **FASCICULE DE BREVET EUROPEEN**

(45) Date de publication du fascicule du brevet: **18.03.87**

(51) Int. Cl.⁴: **G 01 S 13/95,** G 01 S 7/02, G 01 V 3/12

(21) Numéro de dépôt: **82402122.4**

(22) Date de dépôt: **22.11.82**

(54) Récepteur pour sondeur de détection et de mesure de phénomènes relatifs à l'environnement du globe terrestre.

(30) Priorité: **24.11.81 FR 8121969**

(43) Date de publication de la demande:
**08.06.83 Bulletin 83/23**

(45) Mention de la délivrance du brevet:
**18.03.87 Bulletin 87/12**

(84) Etats contractants désignés:
**BE DE GB IT NL**

(56) Documents cités:
**FR-A-2 019 915**
**FR-A-2 461 264**
**FR-A-2 462 720**
**US-A-4 041 490**

**IEEE JOURNAL OF OCEANIC ENGINEERING,**
vol. OE-2, no. 2, avril 1977, pages 200-207, New
York (USA); W.L. GRANTHAM et al.: "The
Seasat-A satellite scatterometer".

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Herbreteau, Louis
9, rue Van de Walle
F-91220 Bretigny sur Orge (FR)**
Inventeur: **Le Roy, Alain
11, rue René Coche
F-92170 Vanves (FR)**

(74) Mandataire: **Mongrédien, André et al
c/o BREVATOME 25, rue de Ponthieu
F-75008 Paris (FR)**

(56) References cited:
**IEEE TRANSACTIONS ON MICROWAVE
THEORY AND TECHNIQUES, vol. MTT-27, no.
3, mars 1979, pages 245-248, New York (USA);
H.-I. CONG et al.: "The low-noise 115-GHz
receiver on the Columbia-GISS 4-ft radio
telescope".**

**Description**

La présente invention concerne un récepteur pour un sondeur permettant la détection et la mesure de phénomènes relatifs à l'environnement du globe terrestre. Ce récepteur s'applique aux sondeurs permettant l'étude de phénomènes relatifs à l'environnement du globe terrestre et notamment à tous les sondeurs destinés à l'étude de l'ionosphère et en particulier à l'étude des modifications de courte durée et de faible amplitude du gradient de la densité électronique de l'ionosphère. Ce récepteur peut également s'appliquer à des sondeurs permettant l'étude d'autres phénomènes tels que par exemple, l'étude ou la surveillance de la houle marine.

On sait que l'ionosphère est la zone située au-dessus de 70 km d'altitude dans laquelle, sous l'influence du rayonnement solaire, une fraction des atomes et molécules qui constitue l'atmosphère terrestre, est séparée en ions positifs et en électrons négatifs. A haute altitude, la raréfaction de l'atmosphère est telle que la densité des électrons est faible. A basse altitude, l'atmosphère est bien plus dense. Cependant, l'énergie du rayonnement solaire a été consommée à haute altitude pour l'ionisation des molécules, et l'énergie résiduelle de ce rayonnement ne suffit plus pour produire une ionisation importante. Il en résulte qu'à basse altitude, l'ionosphère constitue un bouclier de protection de la surface du globe terrestre contre certains rayons ultraviolets dangereux. L'ionisation la plus importante se produit à une altitude de 200 km environ et attient quelques centaines de milliers d'électrons par centimètre cube ($10^5$ à $10^6$/cm$^3$). La grandeur la plus caractéristique de l'ionosphère est donc la densité électronique ou densité d'ionisation. La connaissance de cette densité à différentes altitudes permet de détecter les perturbations que subit l'ionosphère par suite d'évènements que subit le globe terrestre (les tremblements de terre par exemple). La connaissance de la densité électronique de l'ionosphère permet également d'étudier les perturbations ionosphériques soudaines produites par les sursauts d'activité solaire; ces perturbations se traduisent en effet par une augmentation brusque des rayonnements électromagnétiques émis en direction de la terre, en particulier dans la gamme des rayons X. Ces éruptions solaires peuvent également être la cause de fluctuations importantes du champ magnétique terrestre, appelées orages magnétiques; ces orages se traduisent par une augmentation considérable de l'ionisation en régions aurorales; leurs effets peuvent être observés jusqu'aux régions de basse altitude. Enfin, l'ionosphère subit d'importantes oscillations diurnes et nocturnes comprenant les marées et les ondes de gravité; les marées sont excitées par l'échauffement diurne de l'ozone atmosphérique; les ondes de gravité sont excitées par les fronts météorologiques ou par les perturbations aurorales. L'ionosphère subit également des variations lentes liées aux saisons ou au cycle solaire. On connaît différents types de sondeurs qui permettent de détecter des phénomènes relatifs au globe terrestre et à son environnement, en particulier des phénomènes relatifs à l'ionosphère. Parmi ces sondeurs, l'un d'eux, qui est décrit dans la demande de brevet français FR—A—2 461 264 déposée le 6 Juillet 1979 au nom du même demandeur, utilise le principe du radar. Ce sondeur comprend une voie d'émission de signaux électromagnétiques en direction de l'ionosphère, et un récepteur permettant de capter les échos de ces signaux sur différentes couches de l'ionosphère. Les ondes électromagnétiques émisses sont généralement des ondes modulées par impulsions. Ces impulsions sont émises en direction de l'ionosphère ou du phénomène à détecter et les échos résultant sont captés par le récepteur qui détecte ces échos selon leur amplitude, leur fréquence et leur décalage en fréquence. Cette détection permet, connaissant les instants d'émission d'impulsion et les instants de réception des échos de celles-ci sur le phénomène, ainsi que leur fréquence, de déterminer la distance qui sépare ce phénomène de l'émetteur. Dans le cas d'un sondage ionosphérique, une couche ionosphérique réfléchit seulement les ondes électromagnétiques dont la fréquence est inférieure à la fréquence critique liée à la densité électronique maximale de cette couche. Les ondes émises à une fréquence prédéterminée et inférieure à la fréquence critique, fournissent des échos à un instant connu par rapport à l'instant d'émission, permettant de situer l'altitude de la région ionosphérique dont la densité électronique est celle nécessaire à la réflexion de l'onde électromagnétique de sondage. Pour permettre une meilleure connaissance de l'évolution des phénomènes étudiés et notamment des régions ionisées, le sondeur décrit dans la demande de brevet précitée permet également de détecter les faibles variations de densité électronique grâce à l'utilisation de la technique du radar à effet Doppler. De telles variations de densité électronique de l'ionosphère en fonction du temps, se traduisent par des décalages en fréquence par rapport à la fréquence de sondage des échos résultant des ondes émises en direction de l'ionosphère. Cet effet est appelé effet Doppler.

Le sondeur peut permettre d'observer des décalages en fréquence de très faibles valeurs, correspondant à des variations du trajet de phase des ondes électromagnétiques de sondage, de l'ordre du mètre par seconde; de plus, ce sondeur présente une bonne résolution spatiale déterminée par de très faibles largeurs des impulsions émises en direction de l'ionosphère.

On ne connaît pas actuellement de récepteur simple qui permette, dans un sondeur émettant des impulsions sur plusieurs fréquences de sondage, de mesurer des décalages de fréquence (effet Doppler) et de mesurer les temps de propagation de groupe, des signaux modulés émis à différentes fréquences fixes. Généralement, ces récepteurs sont compliqués et souvent, les mesures sont rendues impossibles par la présence de distorsions engendrées par le récepteur et par la présence de fortes interférences parvenant à l'entrée de celui-ci.

On se reportera ici à l'état de la technique selon Revue IEEE-OE-2-1977 pages 20 à 207, qui divulgue un récepteur tel que défini dans le préambule de la revendication 1.

L'invention a pour but de remédier à ces inconvénients et notamment de réaliser un récepteur pour un sondeur permettant la détection et la mesure de phénomènes relatifs à l'environnement du globe terrestre, ce récepteur permettant d'effectuer des mesures de fréquences Doppler et de temps de propagation de groupe, sans que celles-ci soient perturbées par les distorsions engendrées par le récepteur ou par des interférences à son entrée. Selon l'invention ces buts sont atteints avec un récepteur tel que défini dans la revendication 1.

L'invention a pour objet un récepteur pour sondeur de détection et de mesure de phénomènes relatifs à l'environnement du globe terrestre, comportant

(a) une voie de réception recevant à son entrée des signaux échos de signaux électromagnétiques émis vers l'emplacement du phénomène, ladite voie comprenant

(i) un premier étage comportant des moyens de filtre passe-bande dont la largeur de bande contient la gamme possible des fréquences des signaux échos reçus, et des moyens d'amplification,

(ii) un deuxième étage recevant les signaux de sortie du premier étage et comportant des moyens de transposition de fréquence et des moyens d'amplification,

(iii) un troisième étage recevant les signaux de sortie du deuxième étage et comportant des moyens de transposition de fréquence et des moyens de filtrage,

(b) une voie de test et de calibration,
caractérisé par le fait que

(c) le premier étage comporte en outre des moyens d'atténuation, les moyens de filtre passe-bande d'atténuation et d'amplification de cet étage étant mis en série dans cet ordre,

(d) le deuxième étage comporte en outre des moyens d'atténuation et des moyens de filtrage passe-bande, les moyens de transposition de fréquence, d'atténuation, de filtrage et d'amplification de cet étage étant mis en série dans cet ordre,

(e) le troisième étage comporte en outre des moyens d'amplification, les moyens de transposition de fréquence, de filtrage et d'amplification de cet étage étant mis en série dans cet ordre,

(f) les moyens d'atténuation des premier et deuxième étages sont réglables indépendamment pour chaque fréquence des signaux qu'ils reçoivent,

(g) la voie de test et de calibration comporte un générateur fournissant des signaux de fréquence et d'amplitude prédéterminées ainsi que des signaux associés décalés en fréquence, le générateur étant connectable à l'entrée de la voie de réception.

Selon un mode de réalisation, les moyens de transposition de fréquences de chacun des deuxième et troisième étages comprennent un mélangeur permettant de mélanger les signaux reçus sur une entrée avec des signaux de fréquence de référence provenant d'un oscillateur, les oscillateurs des deuxième et troisième étages étant asservis en phase et fournissant des signaux ayant des fréquences de référence différentes.

Selon un autre mode de réalisation, les moyens de filtrage sont des filtres à quartz à temps de propagation de groupe constant.

Selon un autre mode de réalisation, les moyens d'atténuation du premier étage sont réglables par commutation de tensions, chaque tension étant réglable indépendamment pour chaque fréquence de réception des signaux échos.

Selon un autre mode de réalisation, les moyens d'atténuation du deuxième étage sont réglables par commande automatique de gain.

Selon un autre mode de réalisation, les oscillateurs asservis en phase sont des synthétiseurs de fréquences fournissant respectivement sur leurs sorties, des signaux ayant lesdites fréquences de référence, ces synthétiseurs étant reliés à un oscillateur pilote de haute stabilité.

Selon un autre mode de réalisation, le récepteur comprend en outre un relais coaxial pour relier une sortie de la voie de test et de calibration à l'entrée de la voie de réception.

Enfin, selon un autre mode de réalisation, le récepteur comprend en outre un quatrième étage comportant en série, des moyens de transposition de fréquence, de filtrage et d'amplification recevant des signaux issus du troisième étage, les moyens de transposition de fréquence comprenant un mélangeur recevant les signaux issus du troisième étage et un oscillateur appliquant des signaux ayant une autre fréquence de référence sur une autre entrée de ce mélangeur, ces signaux de fréquence de référence étant fournis par une autre sortie d'un synthétiseur de fréquence relié à l'oscillateur pilote.

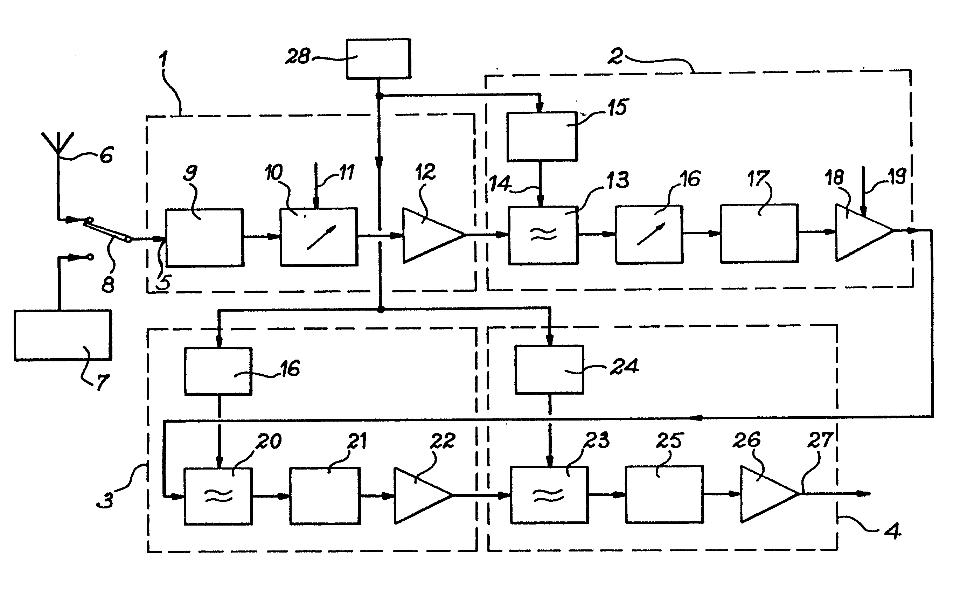

Les caractéristiques et avantages de l'invention ressortiront mieux de la description qui va suivre, donnée en référence à la figure annexée qui représente schématiquement un récepteur conforme à l'invention.

Ce récepteur comprend une voie de réception constituée de plusieurs étages 1, 2, 3, 4 qui seront décrits plus loin en détail. Une entrée 5 de cette voie de réception reçoit par l'intermédiaire d'une antenne 6 des signaux impulsionnels échos des signaux électromagnétiques impulsionnels émis vers un phénomène relatif au bloc terrestre. Ce récepteur comprend aussi une voie de test et de calibration en amplitude et en décalage de fréquence de signaux électromagnétiques. Cette voie de test est essentiellement constituée par un simulateur 7 qui permet tout d'abord de vérifier le fonctionnement de la voie de réception en injectant dans celle-ci, par l'intermédiaire d'un relais coaxial 8 des signaux de référence présentant une amplitude et une fréquence prédéterminées. Elle permet également de calibrer la voie de réception. En effet, il est utile pour l'étude d'un phénomène, de connaître les performances de la voie de réception et notamment de connaître le gain de cette voie pour chacune des fréquences des signaux reçus ainsi que la précision dans la transmission des décalages de fréquence des signaux reçus sur son entrée. Le simulateur 7 fournit donc des signaux de fréquence et d'amplitude prédéterminées et fournit également des signaux décalés en fréquence. La voie de réception comprend un premier étage 1 qui comporte des moyens de filtrage, d'atténuation et d'amplification des signaux échos reçus. Les moyens de filtrage sont constitués par un filtre passe-bande 9, tandis que les moyens d'atténuation sont constitués par un atténuateur 10 programmable pour des tensions qui lui sont appliquées et qui dépendent respectivement des niveaux de réception des fréquences prédéterminées des signaux d'entrée (ou signaux utiles). Chacune de ces tensions permet donc de fixer le coefficient d'atténuation en fonction de la fréquence des signaux utiles. L'entrée de commande par tension de cet atténuateur, est représentée en 11. Cet atténuateur permet, lorsque l'entrée du récepteur reçoit des signaux parasites, ou lorsque la distorsion engendrée par le récepteur est assez importante, de minimiser l'amplitude de cette distorsion ou de ces signaux parasites par rapport à l'amplitude des signaux utiles reçus. Les moyens d'amplification de ce premier étage sont constitués par un amplificateur 12. La voie de réception comprend aussi un deuxième étage 2, constitué par des moyens de transposition de fréquence, d'atténuation, de filtrage et d'amplification. Les moyens de transposition de fréquence sont constitués par un mélangeur 13 qui permet de mélanger les signaux fournis par l'amplificateur 12 de fréquence prédéterminée, avec des signaux présentant une fréquence de référence, appliqués sur une entrée 14 du mélangeur, par une sortie d'un oscillateur local 15, qui sera décrit plus loin en détail. Les moyens d'atténuation sont constitués par un atténuateur 16 à commande automatique de gain qui reçoit les signaux de sortie du mélangeur 13 et qui permet de régler le niveau des signaux parasites sur la voie de réception. En fait, le réglage de cet atténuateur consiste à choisir tout d'abord un taux d'atténuation important, puis à diminuer ce taux progressivement jusqu'à un certain seuil de manière que lorsque l'entrée du récepteur reçoit des signaux échos, l'amplitude de ces signaux soit supérieure à ce seuil. Les moyens de filtrage de ce deuxième étage sont constitués par un filtre de Bessel 17 à quartz. Ce filtre est suivi de moyens d'amplification constitués de manière connue par un amplificateur 18 à commande automatique de gain 19. Le troisième étage de la voie de réception comprend des moyens de transposition de fréquence, de filtrage et d'amplification. Les moyens de transposition de fréquence sont constitués par un mélangeur 20 qui reçoit les signaux de sortie de l'amplificateur 18 et des signaux présentant une fréquence prédéterminée et qui sont fournis par un oscillateur local 16, qui sera décrit plus loin en détail. La sortie de ce mélangeur est reliée à l'entrée des moyens de filtrage constitués par un filtre de Bessel 21, à quartz. La sortie de ce filtre est reliée aux moyens d'amplification, constitués par un amplificateur 22.

Enfin, la voie de réception comprend un quatrième étage comportant les moyens de transposition de fréquence, de filtrage et d'amplification. Les moyens de transposition de fréquence sont constitués par un mélangeur 23 qui reçoi les signaux de sortie de l'amplificateur 22 ainsi que des signaux de fréquence de référence fournis par un oscillateur local 24. La sortie du mélangeur 23 est reliée aux moyens de filtrage constitués par un filtre de Bessel 25, à quartz. Enfin la sortie de ce filtre 25 est reliée à des moyens d'amplification constitués par un amplificateur 26. La sortie 27 de cet amplificateur constitue la sortie de la voie de réception. En fait, les oscillateurs 15, 16 et 24 des deuxième, troisième et quatrième étages de la voie de réception, sont constitués par des synthétiseurs de fréquences pilotés par un oscillateur à quartz 28 et fournissant des signaux des fréquences de référence différentes; ces oscillateurs sont donc asservis en phase.

Le fonctionnement du récepteur va maintenant être décrit, à partir d'un exemple concret de réalisation pouvant être utilisé dans un sondeur permettant la détection et la mesure de phénomènes relatifs à l'environnement du globe terrestre et, notamment, la mesure de phénomènes relatifs à l'ionosphère.

Les filtres 17, 21 et 25 utilisés sont des filtres de Bessel à phaselinéaire, destinés à transmettre des signaux reçu, sans rebond. Les filtres 9, 17, 21 sont des filtres de type passe-bande. Le filtre 9 du premier étage 1 de la voie de réception, est un filtre dont la bande passante est comprise entre 0,5 et 30 MHz, compte tenu du fait que les fréquences prédéterminées des signaux d'entrée sont situées dans cette bande de fréquences. L'atténuation de ce filtre est de 0,1 dB (décibel). Ce filtre est en fait destiné à éliminer la fréquence image de la fréquence du signal utile d'entrée du récepteur. Comme on l'a indiqué plus haut, les signaux d'entrée du récepteur peuvent présenter plusieurs fréquences prédéterminées qui dépendent bien entendu des fréquences prédéterminées d'émission. L'atténuateur 10 qui est relié au filtre 9 du premier étage a, comme on l'a indiqué plus haut, un taux d'atténuation qui peut être réglé automatiquement par des tensions qui dépendent des niveaux de réception des fréquences prédéterminées des signaux reçus à l'entrée de la voie de réception. En fait, cet atténuateur est rendu nécessaire, car l'amplitude des signaux reçus varie selon les fréquences prédéterminées de ces signaux. Cet atténuateur peut d'ailleurs être commandé au rythme des changements des fréquences prédéterminées des signaux d'entrée. Cet atténuateur présente un coefficient d'atténuation variable entre 1,5 et 30 dB. L'amplificateur 12 qui est relié à la sortie de l'atténuateur 10, est un amplificateur à large bande qui présente un gain voisin de 30 dB, mais qui présente également une très grande dynamique de fonctionnement puisqu'il reste linéaire jusqu'à un niveau voisin de 13 dBm (13 dB au-dessus de 1 milliwatt) en sortie. Le mélangeur 13 fonctionne jusqu'à un niveau de 13 dBm sur son entrée et il effectue la transposition de la fréquence de réception $F_e$ à 40 MHz, par mélange avec les signaux délivrés par l'oscillateur 15, dont la fréquence est égale à $F_e+40$ MHz. Il en résulte qu'à la sortie du mélangeur 13, la fréquence des signaux est égale à 40 MHz$\pm F_d$ ($F_d$ étant le décalage en fréquence entre les signaux émis en direction d'un phénomène et les signaux reçus à l'entrée de la voie de réception). Le mélangeur 13 présente un coefficient d'atténuation voisin de 5 db. Le deuxième étage est un étage de moyenne fréquence et il fonctionne à des fréquences voisines de 40 MHz. L'atténuateur 16 dont le taux d'atténuation peut varier entre 2 et 24 dB permet en fait de fixer le gain de la voie de réception pour que les signaux parasites ne perturbent pas les mesures effectuées à la sortie de la voie de réception. En effet, ces parasites ne doivent pas masquer les signaux utiles reçus à l'entrée de cette voie. Le filtre 17 est un filtre de Bessel à quartz, de type passe-bande, dont la largeur de bande varie entre −86 KHz et +86 KHz, autour d'une fréquence centrale de 40 MHz. Ce filtre présente un coefficient d'atténuation voisin de 4 dB et une réponse linéaire en phase. L'amplificateur 18 à commande automatique de gain, est un amplificateur accordé sur une fréquence de 40 MHz, son gain peut varier entre 30 dB et 76 dB. Ce gain peut être réglé de manière connue par une tension de commande appliquée sur l'entrée 19. Le mélangeur 20 permet de mélanger les signaux reçus de l'amplificateur 18 avec des signaux produits par l'oscillateur local 16, dont la fréquence est égale à 50 MHz. Il en résulte qu'à la sortie du mélangeur 20, les signaux présentent une fréquence moyenne de 10 MHz autour de laquelle varient les fréquences de décalage. Ce mélangeur présente une atténuation voisine de 5 dB. Le filtre 21 qui est relié au mélangeur 20, définit la bande passante définitive de la voie de réception. Ce filtre est un filtre passe-bande dont la fréquence centrale est voisine de 10 MHz et dont la bande passante peut varier de 2 à 60 KHz. Il présente lui aussi une réponse linéaire en phase et la largeur de sa bande passante est liée à la largeur des signaux impulsionnels reçus à l'entrée du récepteur. Son coefficient d'atténuation est voisin de 7 dB. L'amplificateur 22 qui est relié au filtre 21, est lui aussi un amplificateur linéaire, accordé sur la fréquence de 10 MHz. Le mélangeur 23 qui est relié à la sortie de cet amplificateur, permet de mélanger les signaux provenant de cet amplificateur avec les signaux fournis par l'oscillateur local 24. Les signaux de cet oscillateur ont une fréquence de référence de 9,9 MHz; il en résulte que le signal de sortie de ce mélangeur est un signal dont la fréquence varie en fonction des fréquences de décalage des signaux d'entrée, autour de 100 KHz. Ce mélangeur présente un coefficient d'atténuation voisin de 7,5 dB. Le filtre 25 qui est relié à la sortie de ce mélangeur est un filtre passe-bas dont la fréquence de coupure est égale à 200 KHz. Ce filtre 25 est un filtre de Bessel. Enfin, la sortie de ce filtre est reliée à un amplificateur linéaire dont le gain est voisin de 20 dB. La sortie 27 de cet amplificateur fournit les signaux qui vont permettre d'effectuer les mesures de décalage de fréquence des signaux d'entrée et, ainsi, vont permettre d'interpréter certains paramètres des phénomènes étudiés. Ces signaux ont une fréquence voisine de 100 KHz pour une amplitude voisine de 3 volts efficace.

L'asservissement en phase des différents oscillateurs locaux 11, 16 et 24 est essentiel puisque les fréquences de réception des signaux d'entrée peuvent varier de 0,5 à 30 MHz et que l'on veut analyser des décalages en fréquence voisins de 1/ 10 Hz notamment dans l'étude de l'ionosphère. Cet asservissement en phase est réalisé par synthèse directe, grâce à des synthétiseurs de fréquences pilotés par un oscillateur à quartz 28. On élimine ainsi les risques d'erreurs sur les mesures de décalage de fréquences. Ce résultat est important puisque dans les récepteurs connus, les oscillateurs locaux ne sont pas asservis en phase les uns par rapport aux autres. Dans le récepteur qui vient d'être décrit, cet asservissement permet d'obtenir une très grande pureté spectrale et un bruit de phase résiduelle très faible. Ce récepteur doit pouvoir être accordé très rapidement sur la fréquence de réception et cet accord se fait grâce au premier oscillateur local 15, autour de 40 MHz. Il implique que tous les étages d'entrée sont des étages à large bande passante; ceci permet d'éliminer la présence de tous les filtres accordables situés en tête de la chaîne d'amplification dans les récepteurs connus. Il en résulte qu'il est possible d'analyser des signaux d'entrée dont l'amplitude est voisine de quelques microvolts en présence de signaux parasites de plusieurs dizaines de millivolts. Ce signal d'entrée ne peut être analysé que si les étages d'entrée présentent une gamme de fonctionnement linéaire et une très grande dynamique, comme on l'a indiqué plus haut. Les atténuateurs permettant de plus, d'atténuer le signal de manière à le placer dans la gamme de fonctionnement linéaire de l'étage d'entrée. Comme ce récepteur est utilisé pour étudier les échos sur l'ionosphère, d'impulsions électromagnétiques ayant des durées variant de 10 microsecondes à quelques centaines de microsecondes, il est important que le récepteur ne déforme pas ces impulsions et en particulier qu'il n'introduise pas de rebonds sur les impulsions reçues. La présence des filtres de Bessel résout ces problèmes.

**Revendications**

1. Récepteur pour sondeur de détection et de mesure de phénomènes relatifs à l'environnement du globe terrestre, comportant

(a) une voie de réception (1, 2, 3) recevant à son entrée des signaux échos de signaux électromagnétiques émis vers l'emplacement du phénomène, ladite voie comprenant

(i) un premier étage (1) comportant des moyens de filtre passe-bande dont la largeur de bande contient la gamme possible des fréquences des signaux échos reçu, et des moyens d'amplification (12),

(ii) un deuxième étage (2) recevant les signaux de sortie du premier étage et comportant des moyens de transposition de fréquence (13) et des moyens d'amplification (18),

(iii) un troisième étage (3) recevant les signaux de sortie du deuxième étage et comportant des moyens de transposition de fréquence (20) et des moyens de filtrage (21),

(b) une voie de test et de calibration (7), caractérisé par le fait que

(c) le premier étage (1) comporte en outre des moyens d'atténuation (10), les moyens de filtre passe-bande (9), d'atténuation (10) et d'amplification (12) de cet étage étant mis en série dans cet ordre,

(d) le deuxième étage (2) comporte en outre des moyens d'atténuation (16) et des moyens de filtrage passe-bande (17), les moyens de transposition de fréquence (13), d'atténuation (16), de filtrage (17) et d'amplification (18) de cet étage étant mis en série dans cet ordre,

(e) le troisième étage (3) comporte en outre des moyens d'amplification (22), les moyens de transposition de fréquence (20), de filtrage (21) et d'amplification (22) de cet étage étant mis en série dans cet ordre,

(f) les moyens d'atténuation (10, 16) des premier et deuxième étages sont réglables indépendamment pour chaque fréquence des signaux qu'ils reçoivent,

(g) la voie de test et de calibration comporte un générateur (7) fournissant des signaux de fréquence et d'amplitude prédéterminées ainsi que des signaux associés décalés en fréquence, le générateur étant connectable à l'entrée de la voie de réception.

2. Récepteur selon la revendication 1, caractérisé en ce que les moyens de transposition de fréquence (13, 20) de chacun des deuxième et troisième étages comprennent un mélangeur permettant de mélanger les signaux reçus sur une entrée avec des signaux de fréquence de référence provenant d'un oscillateur (15, 16), les oscillateurs des deuxième et troisième étages étant asservis en phase et fournissant des signaux ayant des fréquences de référence différentes.

3. Récepteur selon la revendication 2, caractérisé en ce que les moyens de filtrage (9, 17, 21) sont des filtres à quartz à temps de propagation de groupe constant.

4. Récepteur selon la revendication 2, caractérisé en ce que les moyens d'atténuation (10) du premier étage sont réglables par commutation de tensions, chaque tension étant réglable indépendamment pour chaque fréquence de réception des signaux échos.

5. Récepteur selon la revendication 2, caractérisé en ce que les moyens d'atténuation (16) du deuxième étage sont réglables par commande automatique de gain.

6. Récepteur selon la revendication 2, caractérisé en ce que les oscillateurs (15, 16) asservis en phase sont des synthétiseurs de fréquences fournissant respectivement sur leurs sorties, des signaux ayant lesdites fréquences de référence, ces synthétiseurs étant reliés à un oscillateur pilote (28), de haute stabilité.

7. Récepteur selon la revendication 2, caractérisé en ce qu'il comprend en outre un relais coaxial (8) pour relier une sortie de la voie de test et de calibration (7) à l'entrée de la voie de réception (1, 2, 3).

8. Récepteur selon la revendication 6, caractérisé en ce qu'il comprend en outre un quatrième étage (4) comportant en série, des moyens de transposition de fréquence (23), de filtrage (25) et d'amplification (26) recevant des signaux issus du troisième étage (3), les moyens de transposition de fréquence (23) comprenant un mélangeur recevant les signaux issus du troisième étage et un oscillateur (24) appliquant des signaux ayant une autre fréquence de référence sur une autre entrée de ce mélangeur, ces signaux de fréquence de référence étant fournis par une autre sortie d'un synthétiseur de fréquence relié à l'oscillateur pilote (28).

**Patentansprüche**

1. Empfänger für eine Sonde zum Detektieren und Messen von Phänomenen der Erdumgebung, enthaltend

(a) einen Empfangskanal (1, 2, 3), der an seinem Eingang die Echosignale von elektromagnetischen Signalen empfängt, die gegen den Ort des Phänomens ausgesendet wurden, welcher Kanal enthält:

(i) eine erste Stufe (1) mit Bandpaßfiltereinrichtungen, deren Bandbreite den möglichen Frequenzbereich der empfangenen Echosignale aufweist, und Verstärkereinrichtungen (12),

(ii) eine zweite Stufe (2), die die Ausgangssignale der ersten Stufe entgegennimmt und Frequenzumsetzungseinrichtungen (13) und Verstärkungseinrichtungen (18) enthält,

(iii) eine dritte Stufe (3), die die Ausgangssignale der zweiten Stufe entgegennimmt und Frequenzumsetzungseinrichtungen (20) und Filtereinrichtungen (21) enthält,

(b) einen Test- und Kalibrierkanal (7), dadurch gekennzeichnet, daß

(c) die erste Stufe (1) weiterhin Dämpfungseinrichtungen (10) enthält, wobei die Bandpaßfiltereinrichtungen (9), die Dämpfungseinrichtungen (10) und die Verstärkungseinrichtungen (12) dieser Stufe in dieser Reihenfolge hintereinander geschaltet sind,

(d) die zweite Stufe (2) weiterhin Dämpfungseinrichtungen (16) und Bandpaßfiltereinrichtungen (17) aufweist, wobei die Frequenzumsetzungseinrichtungen (13), die Dämpfungseinrichtungen (16), die Filtereinrichtungen (17) und die Verstärkungseinrichtungen (18) dieser Stufe in dieser Reihenfolge hintereinander geschaltet sind,

(e) die dritte Stufe (3) weiterhin Verstärkungseinrichtungen (22) enthält, wobei die Frequenzumsetzungseinrichtungen (20), die Filtereinrichtungen (21) und die Verstärkungseinrichtungen (22) dieser Stufe in dieser Reihenfolge hintereinander geschaltet sind,

(f) die Dämpfungseinrichtungen (10, 16) der ersten und zweiten Stufen unabhängig für jede Frequenz der Signale, die sie erhalten, einstellbar sind,

(g) der Test- und Kalibrierkanal einen Generator (7) enthält, der Signale vorbestimmter Frequenz und Amplitude sowie zugehörige, in der Frequenz versetzte Signale liefert, wobei der Generator mit dem Eingang des Empfangskanals verbindbar ist.

2. Empfänger nach Anspruch 1, dadurch gekennzeichnet, daß die Frequenzumsetzungseinrichtungen der zweiten und dritten Stufen einen Mischer enthalten, der die Mischung der an einem Eingang empfangenen Signale mit Bezugsfrequenzsignalen gestattet, die von einem Oszillator (15, 16) stammen, wobei die Oszillatoren der zweiten und dritten Stufen phasengeregelt sind und Signale liefern, die unterschiedliche Bezugsfrequenzen haben.

3. Empfänger nach Anspruch 2, dadurch gekennzeichnet, daß die Filtereinrichtungen (9, 17, 21) Quarzfilter mit konstanter Gruppenlaufzeit sind.

4. Empfänger nach Anspruch 2, dadurch gekennzeichnet, daß die Dämpfungseinrichtungen (10) der ersten Stufe durch Umschaltung von Spannungen einstellbar sind, wobei jede Spannung unabhängig für jeder Empfangsfrequenz der Echosignale einstellbar ist.

5. Empfänger nach Anspruch 2, dadurch gekennzeichnet, daß die Dämpfungseinrichtungen (16) der zweiten Stufe durch automatische Verstärkungssteuerung einstellbar sind.

6. Empfänger nach Anspruch 2, dadurch gekennzeichnet, daß die phasengeregelten Oszillatoren (15, 16) Frequenzsynthesizer sind, die entsprechend an ihren Ausgängen Signale liefern, die die genannten Bezugsfrequenzen haben, wobei die Synthesizer mit einem Pilotoszillator (28) hoher Stabilität verbunden sind.

7. Empfänger nach Anspruch 2, dadurch gekennzeichnet, daß er weiterhin ein Koaxialrelais (8) zum Verbinden des Ausgangs des Test- und Kalibrierkanals (7) mit dem Eingang des Empfangskanals (1, 2, 3) aufweist.

8. Empfänger nach Anspruch 6, dadurch gekennzeichnet, daß er weiterhin eine vierte Stufe (4) aufweist, die in Serie eine Frequenzumsetzeinrichtung (23), eine Filtereinrichtung (25) und eine Verstärkereinrichtung (26) aufweist und die von der dritten Stufe (3) abgegebene Signale erhält,

wobei die Frequenzumsetzeinrichtung (23) einen Mischer, der die von der dritten Stufe abgegebenen Signale empfängt, und einen Oszillator (24) enthält, der Signale einer anderen Bezugsfrequenz einem anderen Eingang dieses Mischers zuführt, wobei diese Bezugsfrequenzsignale von einem anderen Ausgang eines Frequenzsynthesizers geliefert werden, der mit dem Pilotoszillator (28) verbunden ist.

**Claims**

1. Receiver for a probe for the detection and measurement of phenomena relating to the environment of the earth, comprising

(a) a reception channel (1, 2, 3) receiving at its input echo signals from electromagnetic signals emitted towards the site of the phenomenon, the said channel comprising

(i) a first stage (1) including pass band filtering means, the bandwidth of which includes the possible range of frequencies of the echo signals received, and amplifying means (12),

(ii) a second stage (2) receiving the output signals from the first stage and including frequency transposing means (13) and amplifying means (18),

(iii) a third stage (3) receiving the output signals from the second stage and including frequency transposing means (20) and filtering means (21) and

(b) a test and calibration channel (7), characterized in that

(c) the first stage (1) further includes attenuating means (10), the pass band filtering means (9), the attenuating means (10) and the amplifying means (12) of this stage being connected in series in that order,

(d) the second stage (2) further includes attenuating means (16) and pass band filtering means (17), the frequency transposing means (13), the attenuating means (16), the filtering means (17) and the amplifying means (18) of this stage being connected in series in that order,

(e) the third stage (3) further includes amplifying means (22), the frequency transposing means (20), the filtering means (21) and the amplifying means (22) of this stage being connected in series in that order,

(f) the attenuating means (10, 16) of the first and second stages are regulable independently for each frequency of the signals which they receive,

(g) the test and calibration channel includes a generator (7) providing signals of predetermined frequency and amplitude, as well as associated signals which are displaced in frequency, the generator being connectable to the input of the receiving channel.

2. Receiver according to claim 1, characterized in that the frequency transposing means (13, 20) of each one of the second and third stages include a mixer permitting mixing of the signals received at one input with signals of reference frequency originating from an oscillator (15, 16), the oscillators of the second and third stages being controlled in phase and providing signals having differing reference frequencies.

3. Receiver according to claim 2, characterized in that the filtering means (9, 17, 21) are quartz filters having a constant group propagation time.

4. Receiver according to claim 2, characterized in that the attenuating means (10) of the first stage are regulable by switching of voltages, each voltage being regulable independently for each frequency of reception of the echo signals.

5. Receiver according to claim 2, characterized in that the attenuating means (16) of the second stage are regulable by automatic gain control.

6. Receiver according to claim 2, characterized in that the oscillators (15, 16) controlled in phase are frequency synthesizers providing respectively at their outputs signals having the said reference frequencies, these synthesizers being connected to a pilot oscillator (28) of high stability.

7. Receiver according to claim 2, characterized in that it further includes a coaxial relay (8) to connect an output of the test and calibration channel (7) to the input of the receiving channel (1, 2, 3).

8. Receiver according to claim 6, characterized in that it further includes a fourth stage (4) comprising, in series, frequency transposing means (23), filtering means (25) and amplifying means (26) receiving signals derived from the third stage (3), the frequency transposing means (23) including a mixer receiving the signals derived from the third stage and an oscillator (24) applying signals having a different reference frequency to a different input of this mixer, these signals of reference frequency being provided by a different output of a frequency synthesizer connected to the pilot oscillator (28).